(19) **Europäisches Patentamt / European Patent Office / Office européen des brevets**

(11) **EP 0 998 064 B1**

(12) **FASCICULE DE BREVET EUROPEEN**

(45) Date de publication et mention
de la délivrance du brevet:
**28.11.2007 Bulletin 2007/48**

(51) Int Cl.:
***H04B 7/212*** *(2006.01)*

(21) Numéro de dépôt: **99402592.2**

(22) Date de dépôt: **20.10.1999**

(54) **Dispositif d'échange de signaux radioélectriques munis de marqueurs temporels, en particulier pour la synchronisation d'horloges**

Gerät zum Austausch von Funksignalen die Zeitanzeiger behalten zur Synchronisierung von Zeitstandarden

Apparatus for the exchange of radio signals comprising time markers used to synchronise time standards

(84) Etats contractants désignés:
**AT BE CH CY DE DK ES FI FR GB GR IE IT LI LU MC NL PT SE**

(30) Priorité: **27.10.1998 FR 9813444**

(43) Date de publication de la demande:
**03.05.2000 Bulletin 2000/18**

(73) Titulaire: **THALES SYSTEMES AEROPORTES S.A.
78990 Elancourt (FR)**

(72) Inventeur: **Potier, Thierry
78610 Auffargis (FR)**

(74) Mandataire: **Plaçais, Jean Yves
Cabinet Netter,
36, avenue Hoche
75008 Paris (FR)**

(56) Documents cités:
**FR-A- 2 726 412        US-A- 3 798 650
US-A- 5 697 051**

- **KIRCHNER D: "TWO-WAY TIME TRANSFER VIA COMMUNICATION SATELLITES" PROCEEDINGS OF THE IEEE, vol. 79, no. 7, 1 juillet 1991 (1991-07-01), pages 983-990, XP000264855**

EP 0 998 064 B1

**Description**

L'invention concerne la transmission radioélectrique d'informations chronométriques.

Pour transmettre des tops chronométriques par voie radioélectrique, on utilise le plus souvent une onde porteuse munie d'un motif répétitif formant marqueur temporel, équivalent à une impulsion brève. Le marqueur temporel est par exemple un code de type pseudo-aléatoire ou "pseudo-bruit".

Il est intéressant d'appliquer cette technique à la synchronisation d'horloges très précises, situées par exemple l'une au sol et l'autre à bord d'un satellite. Il s'agit alors de mesurer de façon précise le décalage temporel entre les transitions respectives de ces horloges atomiques. Plus généralement, il s'agit de rechercher le décalage temporel entre deux événements contemporains survenant en des stations distantes dans l'espace, le mot "station" n'impliquant pas ici la fixité.

L'une des stations transmet à l'autre un marqueur temporel lié à son propre événement. Sous réserve de connaître le temps de trajet réel des ondes, l'écart mesuré en l'autre station entre le marqueur temporel reçu et l'événement local (ou un marqueur temporel lié à celui-ci) permet d'accéder au décalage temporel recherché. En outre, on peut faire en sorte que la porteuse soit fréquentiellement liée au marqueur temporel ; la phase de la porteuse vient améliorer la précision.

Pour connaître la distance parcourue par les ondes radioélectriques, il faut une seconde transmission, celle-ci en aller-retour. Dans la plupart des cas, cette seconde transmission doit se faire en même temps que la première. On pourra donc avoir deux émissions et une réception pour l'une des stations, tandis que l'autre station est le siège d'une émission et de deux réceptions.

Par ailleurs, le milieu de transmission est rarement parfait, et souvent dispersif. En particulier, dans le cas d'une transmission terre-satellite, on observe des perturbations fortes à la traversée de l'ionosphère et de la troposphère. Ces perturbations sont variables à court terme, et dispersives, pour l'ionosphère.

La solution classique consisterait à utiliser des fréquences porteuses différentes pour les deux transmissions. Mais cela pose des problèmes, notamment au niveau de l'allocation de fréquences.

Il ne reste donc que la possibilité de réaliser les deux transmissions avec la même fréquence porteuse. Mais cela implique un temps partagé, toujours délicat compte tenu des risques d'interférence. De plus, dès lors que le temps de trajet des ondes entre les deux stations est supérieur à la période de récurrence du marqueur temporel, il arrivera que le signal reçu coïncide avec un moment d'émission, et sera donc perdu par masquage, ce qui est inacceptable.

Il n'existe donc pas actuellement de solution véritablement satisfaisante pour l'échange radioélectrique de signaux chronométriques entre deux stations distantes.

Voir par exemple FR-A-2726412 (CNES).

La présente invention vient améliorer la situation. Elle part d'un dispositif comprenant des moyens d'émission/réception radioélectriques, auxquels sont couplés d'une part un générateur d'un signal à émettre, et d'autre part un circuit de traitement en réception, capable de travailler sur un signal reçu.

L'invention conserve l'idée de faire travailler les moyens d'émission/réception radioélectrique sensiblement sur la même fréquence porteuse en émission et en réception.

Elle surmonte les difficultés précitées en prévoyant de définir des segments temporels disjoints, dont le positionnement temporel (début et/ou fin) est sensiblement aléatoire. L'émission n'est autorisée que pendant ces segments temporels, tandis que la réception n'est autorisée qu'en dehors desdits segments. Ceci permet d'exploiter les marqueurs temporels des signaux sans que l'effet de masquage de la réception par l'émission ne soit récurrent.

A cet effet, le dispositif selon l'invention peut comprendre des moyens séquenceurs capables de définir lesdits segments temporels, et qui commandent un commutateur, monté de sorte que les moyens d'émission/réception ne soient couplés à la voie d'émission que pendant les segments temporels d'émission.

Dans une forme de réalisation préférée, les instants de départ, ainsi que les instants de fin d'émission sont choisis de façon aléatoire. Cependant, les moyens séquenceurs sont agencés pour définir une récurrence moyenne des instants de départ d'émission. Ainsi, les segments temporels d'émission présentent une cadence aléatoire, mais centrée autour d'une cadence moyenne. Les segments temporels de réception sont, quant à eux, complémentaires des segments d'émission, de sorte que la réception débute sensiblement lorsque l'émission s'achève. Préférentiellement, les segments temporels de réception sont de durée moyenne sensiblement identique à la durée moyenne des segments d'émission.

D'autres caractéristiques et avantages de l'invention apparaîtront à l'examen de la description détaillée ci-après, donnée à titre d'exemple, et des dessins annexés sur lesquels:

- la figure 1 représente schématiquement un échange de trois signaux entre une station au sol et une station en orbite,

- la figure 2 représente schématiquement l'allure de deux signaux émis sur une même voie,

- la figure 3A représente de façon plus détaillée le générateur de signaux et le circuit de traitement en réception des dispositifs embarqué et au sol de la figure 1,

- la figure 3B représente le générateur de signaux et le circuit de traitement en réception des dispositifs embarqué et au sol, permettant un échange de quatre signaux e1, r1, e2 et r2,

- la figure 4 représente partiellement sous forme de circuit un exemple de réalisation d'un générateur de signaux à émettre, comportant des moyens séquenceurs du type précité,

- la figure 5A représente, de façon plus détaillée, un exemple de réalisation d'un équipement de la station en orbite, pour l'échange de trois signaux,

- la figure 5B représente de façon plus détaillée un exemple de réalisation d'un équipement de la station au sol, pour un échange de trois signaux avec la station en orbite représentée sur la figure 5A, et

- la figure 6 représente partiellement un exemple de réalisation d'un démodulateur DEMOD prévu sur les voies de réception des circuits représentés sur les figures 5A et 5B.

La description détaillée ci-après et les dessins qui s'y rattachent contiennent, pour l'essentiel, des éléments de caractère certain. Les dessins pourront donc non seulement servir à mieux faire comprendre l'invention, mais aussi contribuer à sa définition, le cas échéant.

On considère ci-après que le dispositif selon l'invention est appliqué à la mesure précise d'un décalage temporel entre deux horloges atomiques distantes. La précision recherchée pour cette mesure est de l'ordre de la picoseconde. Les deux horloges atomiques H1 et H2 sont par exemple des horloges à atomes de césium refroidis.

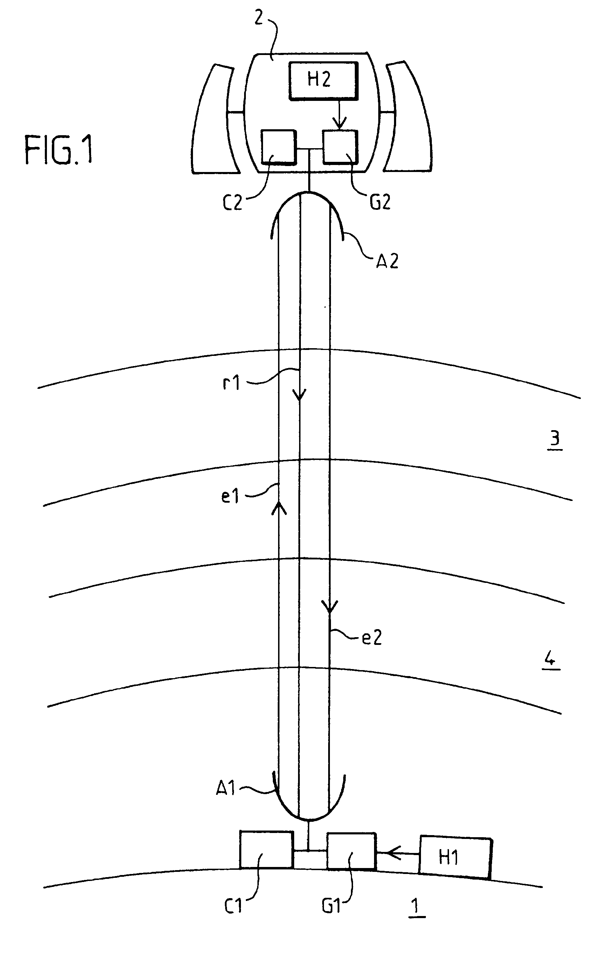

Comme le montre la figure 1, l'horloge H2 est à bord d'un satellite 2 en orbite basse. L'autre horloge H1 est au sol. C'est le contexte de l'expérimentation sur satellite dite "station alpha".

Classiquement, la mesure du décalage entre une horloge distante et une horloge locale est effectuée par voie optique. On utilise un faisceau laser à impulsions, généralement de longueur d'onde voisine de 532 nanomètres. Cependant, l'absorption et la diffusion de ce faisceau par les nuages dans l'atmosphère font que les conditions de traitement en réception ne sont pas toujours correctes.

Pour pallier cet inconvénient, il est envisageable de procéder à un échange de signaux dans la gamme des radiofréquences, susceptibles de subir moins d'absorption et/ou de diffusion qu'un faisceau optique.

La mesure du décalage entre une horloge distante et une horloge locale par voie radio-électrique est plus complexe : on doit procéder à l'échange d'au moins trois signaux. Par exemple, pour mesurer au sol le temps de l'horloge H2 (ou temps de bord), ces trois signaux sont :

- un signal e1, tiré de H1, qu'émet la station au sol 1,

- un signal r1, tiré de e1, que renvoie la station en orbite 2 (ou station alpha), et

- un signal e2, tiré de H2, qu'émet la station alpha 2.

La fréquence porteuse choisie est par exemple voisine de 13,5 GHz. Toute autre fréquence peut convenir dès lors qu'elle est peu absorbée par une atmosphère nuageuse. Le problème est qu'une liaison radiofréquence entre le sol et un satellite en orbite subit des perturbations de propagation dues à la traversée de certaines couches atmosphériques. Par exemple, l'ionosphère 3 (figure 1) induit, par rapport à la propagation théorique en ligne droite, un allongement du temps de trajet, ou retard, qui est sensiblement proportionnel à l'inverse du carré de la fréquence, donc dispersif. Pour une fréquence porteuse voisine de 10 GHz, cet allongement peut, aux incidences obliques, atteindre quelques nanosecondes (quelques dizaines de centimètres en équivalent distance). La troposphère 4 induit également un retard, mais qui ne dépend pas ou peu de la fréquence porteuse.

Pour surmonter l'effet dispersif de l'ionosphère sur des porteuses dans la gamme des radiofréquences, on peut procéder à un choix approprié de trois fréquences porteuses distinctes permettant de réaliser l'échange des signaux (voir par exemple l'article "Performance Data of Space and Ground Hydrogen Masers and Ionospheric Studies for High-Accuracy Comparisons between Space and Ground Clocks", R.F.C. VESSOT & M.W. LEVINE, Proc. of the 28th Annual Symp. on Freq. Contr., Ft. Monmouth, N.J., 1974, pp 408-414). Typiquement, il existe une relation mathématique entre les trois fréquences porteuses, mais il est généralement difficile, voire impossible, d'obtenir une allocation de fréquences couvrant trois fréquences différentes exigées par ce procédé. En outre, l'échange de signaux sur trois fréquences porteuses différentes nécessite l'emploi, pour chaque station, soit d'une antenne à bande très large, soit d'au moins trois antennes, dont les positions relatives soient parfaitement maîtrisées (jusqu'au niveau du centre de phase).

La présente invention propose alors l'échange d'au moins trois signaux de même fréquence porteuse, choisie dans la gamme des radiofréquences, et portant des marqueurs temporels, en principe périodiques, liés à chaque fois au temps à transmettre. L'émission sur trois voies de même fréquence, sensiblement au même instant, permet de compenser les perturbations de propagation, comme on le verra.

En une station, l'instant d'émission est associé à un marqueur temporel local. Cette expression "marqueur temporel" couvre le marqueur temporel lui-même. Elle couvre aussi tout signal temporel lié en phase et en fréquence à ce marqueur temporel : un tel signal est dit "synchrone" du marqueur temporel ; leurs fréquences respectives sont dans un rapport égal à un nombre rationnel.

La réception de chaque signal comprend le calage d'un marqueur temporel local sur le marqueur temporel reçu. Si la porteuse est liée temporellement au marqueur temporel qui la module, ce calage est rendu plus précis en utilisant la phase de la porteuse, telle que reçue. Ceci fournit une "mesure de l'instant de réception".

Dans un exemple, la station distante est un satellite en orbite basse, typiquement entre 300 km et 1000 km au-dessus du sol (non géostationnaire). La station satellite est fréquemment occultée, les durées de visibilité du satellite en un point terrestre donné étant au plus d'environ 300 secondes, sur plusieurs passages espacés de 90 minutes environ, pour une orbite à 300 km d'altitude moyenne.

Sur la figure 1, l'antenne A2 de la station satellite 2 émet un signal e2 en direction de la station au sol 1. L'antenne A1 au sol émet un signal e1, qui est renvoyé (r1) par l'antenne A2 du satellite. On choisit préférentiellement des antennes A1 et A2 de largeur de bande égale à environ 10% de la fréquence centrale. Dans un exemple plus particulier, l'antenne A1 au sol est une antenne parabolique pointée vers le satellite, tandis que l'antenne A2 du satellite est une hélice quadrifilaire d'environ 60° d'ouverture. Avantageuse ment, la polarisation des ondes électromagnétiques utilisées est circulaire ou, plus généralement, elliptique.

On connaît donc, dans la station au sol:

- l'instant d'émission du signal e1,
- l'instant de réception du signal renvoyé r1, et
- l'instant de réception du signal e2.

Les deux signaux e1 et r1 sont considérés comme signaux de référence. Il est fait abstraction pour l'instant des décalages temporels internes des circuits électroniques, en particulier du décalage rencontré à l'autre extrémité pour recréer le signal r1 à partir de e1 tel que reçu ; il est possible en effet de connaître ou corriger ces décalages, comme on le verra plus loin.

Le décalage temporel entre l'instant d'émission de e1 et l'instant de réception de r1 est égal à deux fois le temps de propagation sur la distance sol/orbite (y compris l'effet des anomalies de propagation précitées). On note ce décalage temporel par $2 * T_{er}$. Il est mesuré modulo Tsi, où Tsi est la période ou "époque" des marqueurs temporels utilisés.

De son côté, l'instant de réception $T_{e2}$ du signal e2 porte l'information sur le temps de l'horloge H2 en orbite, augmenté d'une fois le temps de propagation sur la distance sol/orbite (y compris l'effet des anomalies de propagation précitées). L'instant $T_{e2}$ est également mesuré modulo Tsi.

L'homme du métier comprendra que la grandeur $T_{e2} - T_{er}$ porte seulement le temps de l'horloge distante H2. On a ainsi accès au décalage entre l'horloge locale H1 et l'horloge distante H2.

La Demanderesse s'est trouvée confrontée à plusieurs difficultés, pour mettre en oeuvre les échanges de signaux sur une même fréquence porteuse.

Tout d'abord, du fait de la forte amplification requise en réception, il est impossible en pratique de recevoir et d'émettre simultanément sur la même fréquence porteuse, et au même point. Pour chaque antenne, l'invention prévoit que les émissions et les réceptions sont réparties sur des fenêtres temporelles (ou segments temporels) respectives disjointes.

Il est relativement aisé de mesurer le décalage temporel entre deux horloges distantes lorsque l'on peut réaliser un suivi en continu de ce décalage, par des liaisons permanentes entre les stations. Mais, dès lors que les émissions et réceptions des signaux sont intermittentes, il est difficile d'accéder au décalage temporel entre deux horloges distantes par suivi seulement de l'écart de phase entre ces deux horloges à partir d'un point de référence commun, compte-tenu de la variation de la distance sol-satellite, et d'éventuelles petites différences entre les fréquences d'horloges.

On sait en outre que les mesures de temps sont a priori sujettes à une ambiguïté intrinsèque, égale à la période du marqueur temporel utilisé.

Mais il existe encore une difficulté à un autre niveau, que les hommes du métier du radar dénomment parfois "ambiguïté d'impulsion à impulsion" : on considère une suite d'impulsions émises, et des impulsions retour provenant du renvoi par un objet distant de ces impulsions émises ; lorsque le temps de trajet aller-retour est inférieur à la période entre impulsions, toute impulsion retour provient de l'impulsion émise qui la précède immédiatement; il en est différemment dans le cas contraire ; et il peut arriver que l'impulsion retour coïncide avec une impulsion émise, ce qui la rend inexploitable. La Demanderesse a observé que cet effet de "masquage" est très gênant dans les applications chronométriques.

L'invention prévoit que:

- les antennes A1 et/ou A2 émettent toutes les 100 μs en moyenne, et
- les fenêtres temporelles d'émission ont des positions et/ou des durées qui présentent une composante aléatoire, avec de préférence une durée d'environ 50 μs en moyenne. Ceci peut être réalisé en fixant aléatoirement les instants de début et/ou de fin des fenêtres temporelles d'émission.

De son côté, la réception a lieu pendant des fenêtres temporelles qui sont en moyenne sensiblement complémentaires de 100 μs. Ainsi, les fenêtres temporelles en réception ont également une durée aléatoire, égale à un peu moins d'environ 50 μs en moyenne, comme on le verra.

Par le moyen de l'émission et de la réception des signaux dans des fenêtres de positions temporelles respectives aléatoires, on évite un masquage périodique de la réception par l'émission.

En rendant aussi les durées des fenêtres d'émission aléatoires, on évite que le spectre des signaux reçus comprenne des pics trop marqués et proches du résidu de porteuse. Autrement dit, on étale la densité spectrale des signaux reçus, et les conditions de détection de la porteuse Fp s'en trouvent améliorées.

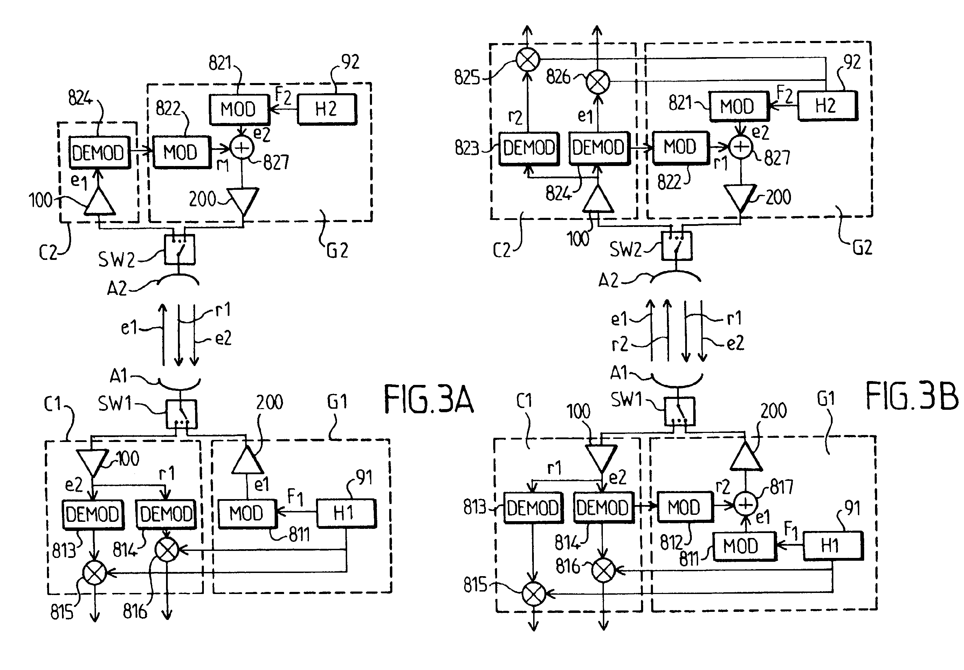

En pratique, pour gérer les priorités d'émission et de réception, les dispositifs d'échange de signaux comportent un commutateur SW1 (ou SW2) à trois voies : émission, temps mort, réception (figures 3A et 3B). En effet, entre l'émission (50 μs en moyenne) et la réception (48 μs en moyenne), 2 μs sont réservées à un temps mort, qui permet par exemple d'éviter la réception d'un signal réfléchi prématurément par un avion.

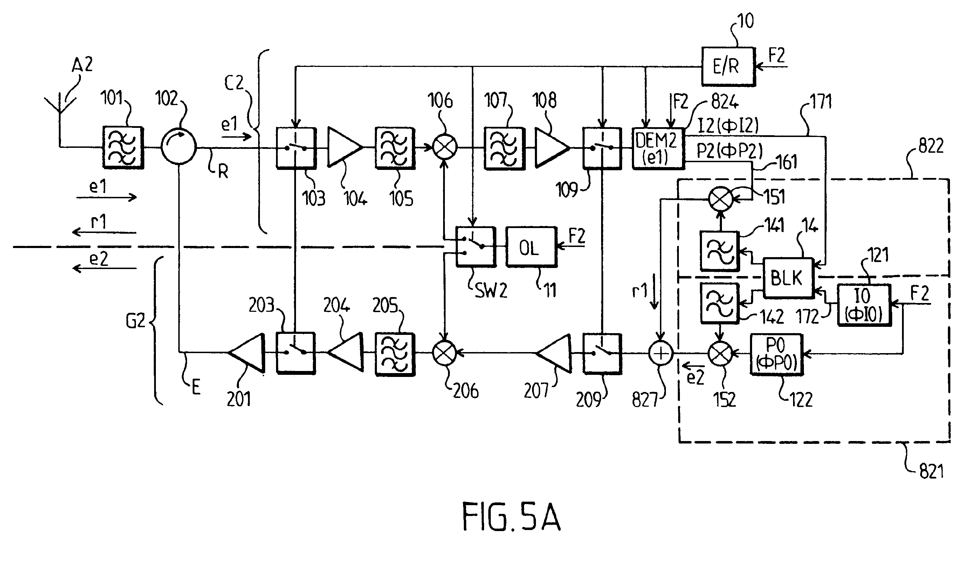

Le commutateur SW est piloté par un séquenceur, dont un mode de réalisation est illustré sur la figure 4. Il comporte un générateur de bruit blanc gaussien 50, suivi d'un filtre passe-bande 51 dont la fonction de transfert H(f) s'écrit:

$$H(f) = K \sin^2(\pi\tau f)/(\pi\tau f)$$

où τ est fonction de la récurrence moyenne des fenêtres d'émission (r = 0,421/Fr) et définit la largeur de bande du filtre. En sortie du filtre 51, il est prévu un comparateur 52, dont le seuil de basculement est choisi pour affiner un rapport cyclique moyen de η≈50% (50 μs d'émission en moyenne, sur 100 μs en moyenne).

En variante, on peut définir les instants successifs de début et de fin des fenêtres temporelles d'émission à l'aide de générateurs de code pseudo-aléatoire (ou code PRN), ou de toute autre manière équivalente, y compris complètement aléatoire.

On notera aussi qu'il n'est pas nécessaire que la station distante connaisse le mode de variabilité utilisé pour les positions et/ou durées d'émission, puisqu'il est prévu, de façon réciproque, que la station distante émette pendant 50 μs en moyenne et toutes les 100 μs en moyenne, et reçoive le reste du temps, aux temps morts près. Ainsi, la réception n'est pas toujours réussie, mais, statistiquement, on disposera toujours d'une proportion suffisante de réceptions réussies pour pouvoir traiter le signal reçu.

La Demanderesse a dû en outre affronter une seconde difficulté liée à l'émission et à la réception de deux signaux à la fois, de même fréquence porteuse r1 et e2 (figure 1) et sur une même voie, comme on le verra plus loin.

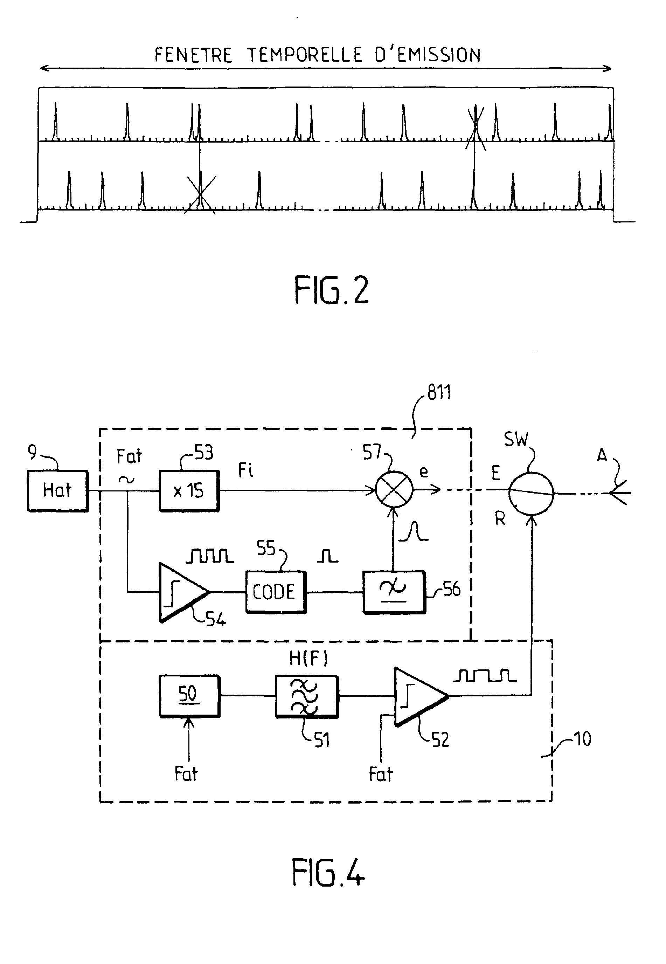

La figure 4 est le schéma de principe du générateur G de signaux à émettre e1 ou e2, dans un mode de réalisation actuellement préféré. L'horloge atomique 9 (ou Hat) délivre des impulsions d'horloge (ou tops) de fréquence Fat (typiquement voisine de 100 MHz). Sur une première voie, un multiplicateur de fréquence 53 forme un signal de fréquence intermédiaire Fi, voisine ici de 1,5 GHz. Sur une seconde voie, un comparateur 54 délivre un signal périodique en créneaux de 10 ns ; on considère les transitions de ces créneaux dans l'un des deux sens possibles ; à partir de là, un générateur de séquence 55 (CODE) choisit pseudo-aléatoirement, toutes les 80 ns, un instant de départ d'impulsion parmi N instants de départ possibles (N=8 sur le diagramme de la figure 2). Ces N instants de départ possibles sont espacés de 10 ns, ce qui correspond à une fréquence de 100 MHz, soit environ un quinzième de Fi.

La cadence moyenne des créneaux ainsi engendrés est voisine de 12,5 MHz. A partir de chaque créneau, un filtre intégrateur 56 génère une impulsion gaussienne de durée voisine de 10 ns dans l'exemple. Cette impulsion gaussienne va, comme entrée de modulation, sur un modulateur 57, qui reçoit comme signal à moduler le signal à fréquence intermédiaire Fi de la première voie. La sortie du modulateur 57 correspond au signal e à émettre.

Le train d'impulsions gaussiennes ainsi généré constitue un motif lié au marqueur temporel de la station émettrice. La modulation par des impulsions dont le profil est sensiblement une fonction gaussienne, permet, avantageusement, d'obtenir une densité spectrale rapidement décroissante en dehors de la bande utile.

Dans l'exemple de la figure 2, les signaux générés présentent une succession d'impulsions de durées voisines de 10 ns, toutes les 80 ns. La position temporelle de chaque impulsion gaussienne est choisie pseudo-aléatoirement sur N niveaux de décalage (N=8 dans l'exemple), espacés de 10 ns. Le taux de répétition de ces impulsions est, en moyenne, constant, préférentiellement voisin 12,5 MHz. L'écart moyen entre deux impulsions successives est d'environ 80 ns, tandis que l'écart maximal entre ces deux impulsions est d'environ 150 ns. De manière générale, les positions temporelles de deux impulsions successives sont séparées d'une durée inférieure à une valeur seuil, ici de 150 ns.

Ainsi:

- la porteuse de chaque signal à émettre est modulée par une suite d'impulsions dont chacune possède une enveloppe en forme de gaussienne ("impulsions gaussiennes"),
- ces impulsions gaussiennes ont toutes la même durée prédéterminée Timp,
- la suite d'impulsions est périodique, de période Tsi,
- à l'intérieur de cette période Tsi, les positions temporelles respectives des impulsions gaussiennes sont sensiblement aléatoires, selon un "motif" de durée Tsi choisi à l'avance,
- le motif est répété sans discontinuité temporelle pendant toute la durée où l'émission est autorisée; par conséquent, les signaux générés se présentent comme une séquence périodique d'impulsions gaussiennes, dans laquelle les instants de départ des impulsions sont choisis pseudo-aléatoirement,
- comme la génération du motif, dans la station considérée, est permanente, les parties émises de ce motif restent cohérentes d'une fenêtre d'émission à la suivante. En outre, les impulsions gaussiennes sont ici "cohérentes d'impulsion à impulsion", c'est-à-dire que la phase de l'onde porteuse se conserve sur l'ensemble de ces impulsions (y compris d'un segment d'émission au suivant).

La suite de motifs de période Tsi peut être considérée comme équivalente à une suite de tops d'horloge de période Tsi. Un top est par exemple associé au début de chaque répétition du motif (ou à tout autre instant fixé du motif, pourvu que cette convention soit figée, et connue).

Les différents motifs utilisés sont choisis pour respecter certaines conditions :

- la corrélation entre deux signaux ayant des motifs différents ne donne rien (que du bruit) ;
- la corrélation entre deux signaux de même motif est fonction de la synchronisation entre les deux signaux. Elle est maximale si la position temporelle du motif est sensiblement la même dans les deux signaux (modulo Tsi). Cette corrélation permet de traiter (à l'ambiguïté près) un petit écart temporel qui est de l'ordre de la largeur à mi-hauteur d'une impulsion gaussienne.

Pour pouvoir, par corrélation, distinguer en réception les signaux échangés, il est nécessaire que les motifs soient connus, soit complètement, soit sous la forme d'une représentation qui permet de les engendrer. Comme la répartition temporelle des impulsions gaussiennes, pseudo-aléatoire, est prédéterminée par rapport à un instant de référence, on sait donc en créer des répliques, pour la corrélation.

Comme déjà indiqué, la Demanderesse préfère actuellement une modulation de l'onde porteuse par des impulsions de forme d'onde gaussienne et de positions temporelles pseudo-aléatoires, en raison des avantages qu'elles présentent. Toutefois, en variante, on pourrait utiliser d'autres types de marqueurs temporels, par exemple fondés sur des codes pseudo-aléatoires, intervenant en modulation par inversion de phase de la porteuse (modulation de type "BPSK" pour Binary Phase Shift Keying).

Dans la suite, on appelle "code" le motif précité de distribution des gaussiennes, ou tout signal équivalent.

Selon une autre caractéristique intéressante de l'invention, on utilise deux codes distincts, l'un pour émettre le signal e1 ou pour renvoyer le signal r1, et l'autre pour l'émission du signal e2, ces codes étant connus en réception en orbite et au sol. Ainsi, chaque signal échangé comporte, outre sa porteuse radiofréquence, un marqueur temporel lié à un code discriminable par corrélation. Pour distinguer les deux signaux reçus r1 et e2 au sol, une corrélation en connaissance de leurs codes respectifs est effectuée par le circuit de traitement en réception C1. On notera que les puissances d'émission se situent ici au dessous du bruit. Par ailleurs, des durées Tsi

voisines de 10 μs suffisent dans cette application, ce qui permet avantageusement des temps de traitement par corrélation relativement courts en réception, typiquement de l'ordre de 20 s pour le récepteur de bord du satellite, contre 2 s au sol, où la position du satellite et la phase de son horloge sont connues avec une bonne approximation.

Les figures 3A et 3B sont les schémas de principe des échanges entre les stations au sol et en orbite, respectivement avec trois et quatre signaux échangés. Ces figures illustrent des modulateurs (MOD) et démodulateurs (DEMOD) que l'on décrira plus loin en détail.

Sur la figure 3A, le commutateur SW1 de la station au sol 1 relie l'antenne A1, soit au circuit de traitement en réception C1, soit au générateur de signaux G1.

Le générateur de signaux G1 comprend l'horloge au sol 91 (ou H1), qui fournit une fréquence F1, pour piloter l'ensemble modulateur 811 (ou MOD). Celui-ci fournit un signal e1 qui, après amplification 200, arrive au commutateur SW1. On rappelle que ce signal e1 est issu de la modulation en amplitude de la fréquence porteuse Fp par le motif ou code ("au sol") associé à ce signal e1.

Le circuit de traitement en réception C1 commence par un étage d'amplification en réception 100, relié à SW1. La sortie de cet amplificateur 200 va sur deux ensembles démodulateurs 813 et 814 (ou DEMOD), qui travaillent respectivement sur les codes des deux signaux e2 et r1. Comme on le verra plus loin, le traitement DEMOD comprend une démodulation cohérente de la porteuse et une synchronisation des codes par corrélation.

A la réception, le temps de propagation de l'onde se manifeste à la fois par un décalage temporel du motif et par un décalage de phase de la porteuse. La corrélation est effectuée sur des longueurs de motifs prédéterminées, à l'aide d'une mesure d'un écart de phase de porteuse, et peut donner une valeur d'un décalage temporel entre les signaux r1 et e1, d'une part, et e2 et e1, d'autre part. Ensuite, les compara teurs 815 et 816 rappellent symboliquement que l'on va comparer les marqueurs temporels des signaux reçus à l'horloge atomique locale du sol, H1.

Le commutateur SW2 de la station en orbite 2 relie l'antenne A2 soit au circuit de traitement en réception C2, soit au générateur de signaux G2.

Le circuit de traitement en réception C2 commence par un étage d'amplification en réception 100, relié à SW2. La sortie de cet amplificateur 200 va sur un ensemble démodulateur 824, qui travaille sur le code du signal e1 reçu.

Le générateur de signaux G2 comprend l'horloge satellite 92 (ou H2), qui fournit une fréquence F2, pour piloter l'ensemble modulateur 821 (ou MOD). Celui-ci fournit un signal e2, dont le motif de modulation est distinct du motif de e1. Par ailleurs, la sortie du démodulateur 824 est appliquée à un autre modulateur 822, pour établir le signal r1 à ré-émettre. Une jonction 827 réunit les deux signaux e2 et r1 (de préférence avec exclusion mutuelle, comme on le verra), pour les appliquer à l'amplification d'émission 200. Les signaux r1 et e2 sont émis par l'antenne A2 de la station en orbite.

L'amplification 200 (dans les deux cas) doit être suffisamment linéaire pour éviter une distorsion de phase notamment de la porteuse, et pour encaisser les variations de gain en supportant l'amplitude maximale des signaux (ou crête). En outre, dans le générateur de signaux G2, deux impulsions associées respectivement aux signaux émis r1 et e2 peuvent se chevaucher. On peut décider que la première impulsion arrivée est prioritaire et sera seule sélectionnée pour l'émission (diagramme de la figure 2). L'émission simultanée de deux impulsions, envisageable en variante, nécessiterait des caractéristiques de linéarité particulièrement poussées au niveau de l'amplificateur 200 de G2.

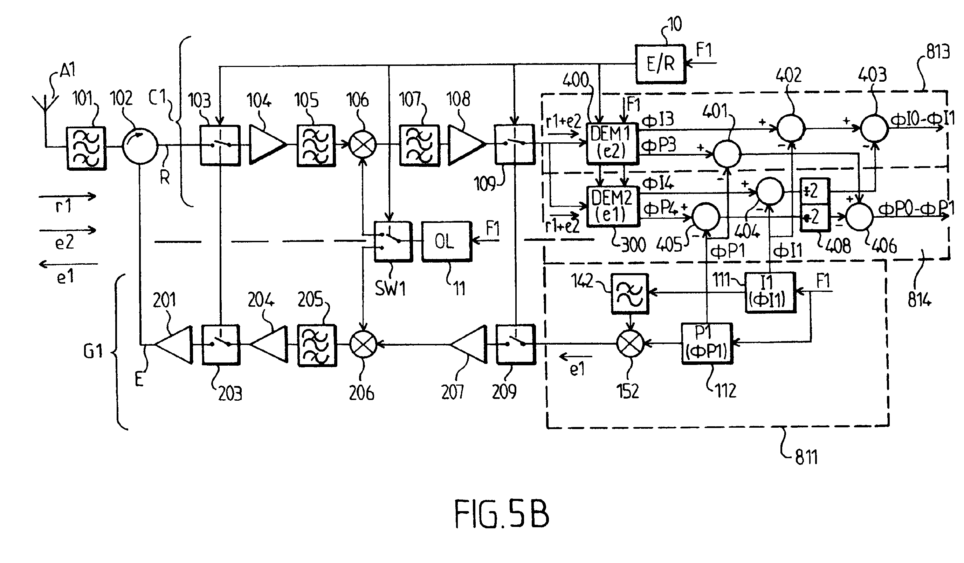

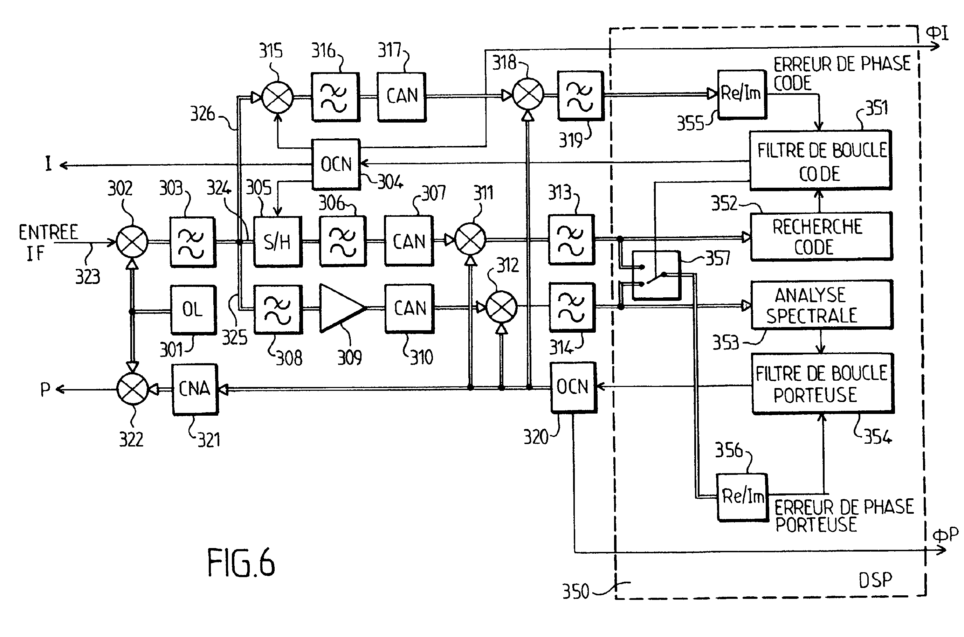

Les figures 5A, 5B et 6 sont des schémas détaillés, dans le cas de trois signaux échangés. Elles diffèrent des schémas de principe essentiellement par l'intervention de changements de fréquence, et par une mise en oeuvre "distribuée" des commutations SW1 et SW2.

La figure 5A concerne l'équipement prévu à bord du satellite, dans l'application visée. L'antenne A2 est suivie d'un filtre passe-bande d'antenne 101, qui délimite la bande utile d'émission/réception, suivi d'un circulateur 102, pour la séparation en deux voies d'émission E et de réception R.

En réception R, le signal e1 traverse l'interrupteur commandé 103, puis l'amplificateur 104, et le filtre passe-bande 105, pour atteindre le mélangeur 106, qui reçoit par ailleurs, à travers le commutateur SW2, un signal de fréquence F2 que délivre le synthétiseur 11 de l'oscillateur local (horloge de bord H2). La sortie du mélangeur 106 est restreinte à la composante Fp - F2 par un filtre passe-bande 107. Après amplification en 108, le signal résultant est appliqué au démodulateur 824 sur lequel on reviendra plus loin. Celui-ci fournit un signal reconstitué I2 (motif du train d'impulsions du signal e1) sur la voie 171, et un signal reconstitué P2 de fréquence Fp - F2 sur la voie 161. On note $\Phi I2$ et $\Phi P2$ les mesures des positions temporelles ou "phases" respectives des signaux I2 et P2.

Pour l'émission, un générateur de signal 121 élabore un signal I0 de phase $\Phi I0$, comportant le motif d'un train d'impulsions en créneaux (motif du signal e2), à partir d'une fréquence F2, synchrone de l'horloge atomique de bord H2. De même, un générateur de signal 122 délivre un signal P0 de fréquence Fp - F2 égale à la fréquence intermédiaire Fi, et de phase $\Phi P0$. Ainsi, les fréquences et les phases des deux composants I0 (voie 172) et P0 (voie 173) du signal e2 sont tirées de l'horloge de bord H2.

Les deux entrées d'un filtre d'anti-coïncidence 14 reçoivent respectivement le train d'impulsions reconstitué I2 (issu de e1 reçu) et le train d'impulsions local I0 (motif e2, issu de l'horloge de bord), qui ressortent séparément sur deux sorties, en principe inchangés. Cependant, si deux impulsions respectives de I0 et I2 se chevauchent, le filtre 14 supprime l'impulsion qui est en retard par rapport à l'autre. Les deux trains d'impulsions I2 et I0 sont ensuite appliqués respectivement à des filtres intégrateurs 141 et 142, pour former des impulsions de profil d'ondes gaussiennes. Le train d'impulsions I2 traité est modulé en 151 par le signal reconstitué P2, et le train d'impulsions I0 traité est modulé en 152 par le signal P0 de fréquence Fp - F2 tirée de l'horloge de bord H2.

Les fonctions du modulateur 822 de la figure 3A sont assurées par les éléments 141,151 et la voie I2 de l'élément 14. Les fonctions du modulateur 821 de la figure 3A sont assurées par les éléments 142,152 et la voie I0 de l'élément 14. On peut considérer que les éléments 121 et 122 font partie du modulateur 821, ou, plus généralement, du générateur G2 de la figure 3A.

A ce stade, le signal en sortie du modulateur 151 est représentatif du signal r1, mais avec une fréquence porteuse équivalente à Fp - F2. De même, le signal en sortie du modulateur 152, est représentatif du signal e2, mais avec une fréquence porteuse équivalente à Fp - F2, tirée de l'horloge de bord.

La jonction 827 effectue ensuite la somme des deux signaux en sortie des modulateurs 151 et 152. Après traversée de l'interrupteur 209, cette somme est amplifiée en 207, puis mélangée en 206 avec l'autre sortie du commutateur SW2, en tant qu'oscillateur local de fréquence F2. La sortie du mélangeur 206 est restreinte à la composante en fréquence porteuse Fp par un filtre passe-bande 205, puis amplifiée en 204. Après traversée de l'interrupteur 203 et de l'amplificateur 201, le signal rejoint l'entrée émission du duplexeur ou circulateur 102.

Le commutateur principal SW2 est piloté par un séquenceur d'émission/réception 10, comme indiqué plus haut, en fonction de la fréquence de l'horloge de bord F2. De préférence, on prévoit en outre des interrupteurs 103, 203, 109 et 209. Lorsque les deux interrupteurs 103 et 109 sont fermés (ouverts), les interrupteurs 203 et 209 sont ouverts (fermés) et le commutateur SW2 est connecté à la voie de réception R (d'émission E). Le séquenceur 10 comprend par exemple le générateur de bruit 50, le filtre 51 et la bascule 52 de la figure 4.

L'homme du métier comprendra que les amplificateurs 100 et 200 du schéma de principe de la figure 3A correspondent respectivement aux suites d'amplifications 104 et 108 d'une part, 207,204 et 201, d'autre part.

De façon générale, le générateur de signal de la station en orbite est apte à :

- engendrer lui-même un signal émis e2, dont le marqueur temporel est calé sur l'horloge atomique locale H2, et
- coopérer avec le circuit de traitement en réception pour générer un signal à retourner r1, dont le marqueur temporel est calé sur le signal reçu e1.

Le mot "calé" s'entend sous réserve des retards dans les circuits de traitement, qui sont déterminables.

La station satellite de la Figure 5A travaille avec l'équipement prévu au sol de la figure 5B. Après l'antenne A1 et son filtre 101, on trouve, comme sur la figure 5A, une voie de réception R et une voie d'émission E. Les éléments semblables portent la même référence et ne seront pas décrits à nouveau. Les différences sont:

- d'une part que les signaux traités sont e1 en émission, et r1 et e2 en réception, et
- d'autre part que le séquenceur 10 et l'oscillateur local 11 sont définis par rapport à l'horloge atomique au sol H1.

Dans le bloc 811, le générateur de signaux 111 délivre un signal I1 représentatif du train d'impulsions gaussiennes selon le motif au sol et en fonction de la fréquence F1 de l'horloge au sol, et le générateur de signaux 112 délivre un signal P1 de fréquence Fp-F1 tirée de l'horloge au sol. Les fonctions du modulateur 811 de la figure 3A sont assurées par les éléments 111, 112, 142 et 152 de la figure 5B. On peut considérer que les éléments 111 et 112 font partie du modulateur 811, ou, plus généralement, du générateur G1 de la figure 3A. Un exemple plus détaillé de la structure du modulateur 811 est représenté sur la figure 4.

Après traitement par le filtre passe-bande 142, le signal I1 module le signal P1 en 152 ; le résultat est envoyé sur l'interrupteur d'entrée 209 de la voie d'émission E. Le signal résultant est représentatif du signal à émettre e1, mais avec une fréquence porteuse équivalente à Fp-F1, avant le mélange en 206.

De son côté, la voie de réception R de l'équipement au sol se sépare, après l'interrupteur de sortie 109, en deux voies de démodulation 813 et 814 (voir aussi figure 3A), comportant respectivement des démodulateurs 300 et 400, de structures semblables (figure 6). Cependant, le démodulateur 300 travaille sur la base du motif du train d'impulsions qu'émet la station au sol, tandis que le démodulateur 400 travaille sur la base du motif du train d'impulsions qu'émet la station en orbite.

En sortie du démodulateur 400, les deux voies ΦI3 et ΦP3 délivrent les phases respectives reconstituées du motif du signal e2 et du signal de fréquence intermédiaire Fp - F1. En sortie du démodulateur 300, les deux voies ΦI4 et ΦP4 délivrent les phases respectives reconstituées du motif du signal r1 et du signal de fréquence intermédiaire Fp - F1.

En sortie des générateurs de signaux 111 et 112, les phases respectives ΦI1 et ΦP1 du motif du signal e1 et du signal de fréquence intermédiaire Fp - F1 (tirée de l'horloge au sol) sont soustraites à ΦI4 et ΦP4 en 404 et 405. Ces deux différences de phase sont fonction du temps de parcours "aller/retour" du signal émis e1. En sortie des opérateurs diviseurs 407 et 408, les différences de phase deviennent fonction d'un temps de trajet "aller". Par ailleurs, les opérateurs soustracteurs 402 et 401 effectuent de la même manière les différences de phases entre ΦI3 et ΦI1, d'une part et ΦP3 et ΦP1, d'autre part. Ces différences de phases tiennent compte à la fois d'un temps de trajet "aller" et d'un décalage éventuel entre les deux horloges à bord et au sol. Ainsi, les différences de phase ΦI0-ΦI1 et ΦP0-ΦP1 en sortie des opérateurs 403 et 406 ne sont plus fonction que d'un décalage entre les horloges.

Comme, ici, le motif de chaque signal est lié en phase et en fréquence à sa porteuse, le circuit de traitement en réception (démodulateurs 300 et 400) réalise avantageusement un affinage de la poursuite du motif par corrélation et une poursuite de phase sur la porteuse détectée au préalable par analyse spectrale, comme on le verra ci-après.

On se réfère maintenant à la figure 6 pour décrire la structure détaillée de l'un des démodulateurs 300, 400 et 824. On prend l'exemple du démodulateur 300.

Globalement, ce démodulateur reçoit comme entrée 323 un signal à fréquence intermédiaire IF. Comme sorties, il a :

- d'une part deux sorties de signal I (code) et P (porteuse),
- d'autre part deux sorties de mesure de position temporelle ou "phase" ΦI (code) et ΦP (porteuse).

Le signal en entrée 323 du démodulateur, est de fréquence intermédiaire Fp-F et présente un train d'impulsions gaussiennes de motif noté "code". Il est appliqué à un mélangeur 302 (démodulateur synchrone), recevant par ailleurs la sortie d'un oscillateur local (synthétiseur) 301, calé sur l'horloge locale. La sortie du mélangeur 302, après filtrage passe-bas en 303, est un signal complexe (double trait), pratiquement en bande de base.

L'initialisation ou acquisition se fait à l'aide d'une première voie de porteuse 325, où le signal en bande de base est moyenné (308, 309), puis converti en signal numérique par le convertisseur analogique/numérique 310. Le signal moyenné est mélangé, en 312, à un signal que délivre l'oscillateur à commande numérique 320. Après le mélange 312, on prévoit un filtrage passe-bas en 314, puis une analyse spectrale en 353.

On a vu que l'analyseur spectral 353 permet de tenir compte de la fréquence porteuse du signal reçu, effet Doppler inclus (Fp $\pm$ 2Δν). La Demanderesse a observé en effet que cet effet Doppler comprend une composante spécifique à l'application à cause du déplacement du satellite 2. Pour une fréquence porteuse radioélectrique d'environ 13,5 GHz, il en découle un écart relatif en fréquence qui est en l'espèce de l'ordre de $2.10^{-4}$. Cela aussi est corrigé selon l'invention.

L'analyse spectrale permet donc de pré-positionner le filtre de boucle de porteuse 354, sur la porteuse (décalée d'après les changements de fréquence), et compte-tenu de l'effet Doppler total. Ce filtre de boucle pilote en numérique un oscillateur à commande numérique 320, dont la sortie va vers le mélangeur 312 déjà cité, vers d'autres mélangeurs 311 et 318, ainsi que vers un convertisseur numérique-analogique 321.

Après pré-positionnement du filtre de boucle porteuse 354, on obtient en sortie du mélangeur 312 et de son filtre 314 une grandeur complexe d'erreur de phase porteuse qui, dans la position représentée du commutateur 357, agit sur l'organe 356 pour appliquer la grandeur d'erreur au filtre de boucle 354, fermant ainsi la boucle, et qui corrige en conséquence la commande numérique de l'oscillateur 320. L'organe 356 élabore l'erreur de phase sous la forme du rapport de la partie réelle à la partie imaginaire de la grandeur complexe d'erreur de phase porteuse.

La boucle de porteuse étant fermée, la représentation de la porteuse redevient analogique en sortie du convertisseur 321. Après mélange en 322 avec le signal local de 301, on obtient le signal de porteuse P. L'oscillateur 320 fournit aussi la mesure numérique de phase de porteuse $\Phi P$.

Par ailleurs, un filtre de boucle de code 351 pilote en numérique un oscillateur de code 304 à commande numérique, dont deux sorties fournissent le signal de code I et la mesure numérique de phase de code $\Phi I$.

Mais cet oscillateur 304 commande aussi un échantillonneur-bloqueur 305, placé en tête de la seconde voie de porteuse (commençant en 324), qui comprend un filtre passe-bas 306, un convertisseur analogique/numérique 307, le mélangeur précité 311 avec la sortie de 320, et son filtre 313.

De manière connue, un étage 352 agit par essais de pré-positionnement du filtre 351, pour rechercher un commencement de corrélation entre le code local et le code reçu. Dès que la corrélation commence, l'échantillonnage de porteuse 305 se fait en synchronisme avec les impulsions gaussiennes. D'où la présence d'un signal significatif en sortie du filtre 313, ce qui informe l'unité 357 de ce début de synchronisme.

A partir de ce moment, la voie de code, qui commence en 326, peut fonctionner. En outre, dès que le synchronisme code est suffisant, le filtre 351 fait basculer le commutateur 357, de sorte que la grandeur d'erreur du filtre de boucle porteuse 354 est maintenant fournie par la seconde voie de porteuse, dont le rapport signal à bruit est meilleur.

La voie de code comprend un mélangeur 315 avec la sortie de l'oscillateur de code 304 à commande numérique, son filtre 316, un convertisseur analogique/numérique 317, le mélangeur précité 318 avec la sortie de 320, son filtre 319, et enfin l'organe 355, qui, comme l'organe 356, élabore une erreur de phase code sous la forme du rapport de la partie réelle à la partie imaginaire de la grandeur complexe d'erreur de phase code, et prend le relais pour piloter le filtre de boucle 351.

Les éléments 351 à 357 sont de préférence implémentés dans un module 350, qui est par exemple de type processeur à signal numérique en temps contrôlé ("DSP" pour "Digital Signal Processor").

Les constantes de temps des boucles du démodulateur sont ici de l'ordre d'une dizaine de millisecondes. Avantageusement, la fréquence moyenne des instants de départ des fenêtres temporelles d'émission, de 10 kHz dans l'exemple décrit, est suffisante pour permettre aux boucles de travailler sur plusieurs fenêtres temporelles de réception.

Par ailleurs, le temps de traitement pour la mise en forme du signal r1 à renvoyer peut être calculé par la station au sol et pris en compte. Les estimations de $\Phi I4$-$\Phi I1$ et $\Phi P4$-$\Phi P1$ (figure 5B) tiennent compte de ce temps de traitement comme si le signal r1 correspondait à un signal e1 réfléchi sans décalage temporel.

Dans ce mode de fonctionnement de l'ensemble station en orbite/station au sol, les échanges de signaux se font par émission/réception de trois signaux de même fréquence, et il n'est possible de déduire que le temps de bord (horloge H2) au sol.

On se réfère maintenant à la figure 3B pour décrire un ensemble station en orbite/station au sol permettant d'obtenir à la fois le temps de bord (horloge H2) au sol, et le temps de sol (horloge H1) à bord. Les deux dispositifs, embarqué et au sol, sont agencés pour opérer de façon sensiblement symétrique. Chaque station comporte une antenne A reliée à un commutateur SW à trois positions. Leur circuit de traitement en réception C est équivalent au circuit C1 de la station au sol représenté sur la figure 3A, tandis que leur générateur de signaux G est équivalent au générateur de signaux G2 de la station en orbite représenté sur la figure - 3A. On ne décrira donc pas leur structure de façon détaillée. Les deux stations échangent quatre signaux e1, r1 et e2, qui correspondent aux trois signaux échangés précédemment, ainsi qu'un quatrième signal r2 qui correspond au signal e2 que renvoie la station au sol vers la station en orbite. La comparaison des signaux e1,r1 et e1,e2 (phases de code et porteuse) permet d'accéder au temps de bord, et la comparaison des signaux e2,r2 et e2,e1 permet d'accéder au temps de sol.

Dans l'exemple représenté sur la figure 3B, la station au sol et la station satellite sont semblables, mais non identiques. De façon plus générale, le circuit de traitement en réception au sol est agencé pour distinguer sélectivement par corréla tion et poursuite le motif lié au marqueur temporel du signal reçu et le motif lié au marqueur temporel d'un second signal à recevoir. Dans l'application visée, le second signal à recevoir correspond au signal émis par le dispositif, et renvoyé par la source dudit signal reçu. Cela permet d'obtenir l'écart temporel entre les deux marqueurs temporels en compensant sensiblement les décalages temporels instantanés de propagation.

Au lieu de retourner le signal reçu par ré-émission, on pourrait procéder par réflexion, pour certaines applications où la perte de signal par réflexion est supportable.

Bien entendu, la présente invention ne se limite pas à la forme de réalisation décrite précédemment à titre d'exemple. Elle s'étend à d'autres variantes.

Ainsi, on comprendra que, dans le cadre d'une liaison sol/orbite par échange de trois signaux, il peut être souhaité de mesurer le temps de sol (horloge H1) à bord. Dans un autre mode de fonctionnement, la station en orbite émet alors un signal e1, renvoyé (r1) par la station au sol qui, elle-même, émet un signal propre e2. Dans ce cas, le dispositif au sol (en orbite) présente des caractéristiques similaires à celles du dispositif en orbite (au sol) décrit ci-avant.

Dans l'exemple décrit, les échanges de signaux se font entre une station en orbite et une station au sol. En variante, ces échanges de signaux peuvent se faire entre deux stations au sol ou entre deux stations en orbite, l'ensemble comportant éventuellement une station relais en orbite ou au sol, le cas échéant.

Il peut être prévu en outre un échange de signaux entre plusieurs stations en orbite ou au sol. Si n est le nombre de stations en liaison, le nombre de signaux échangés devient 2 n + 1, et le nombre de motifs ou codes à prévoir est n + 1.

De manière plus générale, la présente invention vise aussi bien un dispositif du type décrit ci-avant, embarqué ou au sol, et pour l'échange de trois signaux ou plus, de même fréquence porteuse.

Les valeurs de fréquence porteuse, de fréquences de codes, de bandes passantes, des périodes d'échantillonnages des impulsions, etc, sont données ici à titre d'exemple ; elles sont susceptibles d'être modifiées dans une variante du dispositif selon l'invention. Par ailleurs, plusieurs passages par des fréquences intermédiaires successives (Fp-F) peuvent être prévus dans les traitements en émission et réception, si l'application visée le nécessite.

Dans l'exemple décrit, la porteuse des signaux générés est modulée en amplitude par des ondes de forme sensiblement gaussienne. Cette modulation est avantageuse en termes d'encombrement spectral. Mais elle n'est décrite ici qu'à titre d'exemple.

Par ailleurs, la répartition pseudo-aléatoire des instants de départ des impulsions gaussiennes, est décrite aussi à titre d'exemple. En variante, des codages encore différents, par exemple en modulation pseudo-aléatoire d'amplitude, peuvent être aussi envisagés. L'amplitude de la porteuse peut être ainsi modulée par un train de bits de longueur prédéterminée, et dont la valeur de chaque bit est tirée aléatoirement entre 0 et 1. De préférence, la probabilité d'occurrence des bits du code à 1 doit être choisie inférieure à 50%, notamment pour limiter les chevauchements de deux impulsions en émission. De manière plus générale, d'autres types de code assimilable à un bruit peuvent être prévus. Cependant, il est nécessaire que ce bruit soit connu en réception, donc définissable par un message de longueur finie.

Dans l'exemple décrit, on cherche à mesurer un décalage temporel entre des horloges atomiques à atomes refroidis. De façon plus générale, le dispositif selon l'invention peut être appliqué pour déterminer avec précision la date d'un événement temporel quelconque, susceptible d'être représenté par un signal périodique.

Les circuits représentés sur les figures 4, 5A, 5B et 6 sont donnés ici seulement à titre d'exemple de réalisation d'un dispositif selon l'invention. Par ailleurs, les figures 3A et 3B, bien que plus générales, admettent aussi des variantes.

Cependant, de nombreux aspects décrits sont intéressants en eux-mêmes, pour les avantages qui leur sont propres, et ce, indépendamment des autres caractéristiques de l'invention.

La présente invention peut aussi se manifester sous la forme d'un procédé pour l'échange de signaux radioélectriques définis par une porteuse munie d'un marqueur temporel. On peut considérer que la première étape de ce procédé consiste à prévoir des moyens d'émission/réception du type précité. Selon l'invention, ces moyens d'émission/réception sont capables de travailler sur la même fréquence porteuse en émission et en réception, et le procédé comporte en outre une étape qui consiste à définir des segments temporels du type précité. L'émission n'est alors autorisée que pendant ces segments temporels, tandis que la réception n'est autorisée qu'en dehors desdits segments.

Dans la réalisation préférée, décrite ci-avant, du dispositif selon l'invention, les instants de départ et de fin d'émission sont choisis de façon aléatoire. Les moyens séquenceurs sont toutefois agencés pour définir une récurrence moyenne des instants de départ d'émission.

Cependant, les moyens séquenceurs peuvent, dans une variante, travailler à partir d'un découpage du temps en intervalles de temps consécutifs, de durées toujours supérieures à la durée des segments d'émission. C'est dans chacun de ces intervalles de temps que l'on peut définir la position aléatoire d'un segment temporel. Préférentiellement, la durée des interval les de temps est prédéterminée tandis que la durée des segments temporels d'émission est aléatoire. Dans ce cas, les segments temporels d'émission présentent à nouveau une cadence aléatoire, centrée autour d'une cadence moyenne qui est alors définie par le pas des intervalles précités.

Dans une autre variante, il peut être prévu des segments temporels d'émission de durées prédéterminées, par exemple de durées identiques d'une émission à l'autre, tout en conservant des instants de départ d'émission choisis aléatoirement dans des intervalles du type précité.

Cependant, le choix aléatoire des instants de départ et de fin d'émission, selon la réalisation préférée décrite ci-avant, permet avantageusement d'atténuer l'amplitude de raies de battement liées à la récurrence moyenne des émissions (de 10 kHz dans l'exemple décrit).

**Revendications**

1. Dispositif pour l'échange de signaux radioélectriques munis de marqueurs temporels, comprenant des moyens d'émission/réception radioélectrique (A), auquel sont couplés d'une part un générateur (G1) d'un signal à émettre (e), comprenant une porteuse et un marqueur temporel répétitif, et d'autre part un circuit de traitement (C1) en réception, capable de travailler sur un signal reçu, comprenant de même une porteuse et un marqueur temporel répétitif,
**caractérisé en ce que** les moyens d'émission/réception radioélectrique sont agencés pour travailler sensiblement sur la même fréquence porteuse en émission et en réception, et **en ce que** le dispositif comprend des moyens séquenceurs (10) aptes à définir des segments temporels disjoints de positions successives sensiblement aléatoires, et à coopérer avec les moyens d'émission/réception (SW,A) pour n'autoriser l'émission que pendant ces segments temporels, tandis que la réception n'est autorisée qu'en dehors des segments, ce qui permet d'exploiter les marqueurs temporels sans effet de masquage récurrent de la réception par l'émission.

2. Dispositif selon la revendication 1, **caractérisé en ce que** les segments temporels comportent une cadence aléatoire, centrée autour d'une cadence moyenne.

3. Dispositif selon l'une des revendications 1 et 2, **caractérisé en ce que** les moyens séquenceurs (50,51,52) sont aptes à définir des segments temporels, pour l'émission et la réception, de durées moyennes respectives sensiblement équivalentes.

4. Dispositif selon l'une des revendications 1 à 3, caractérisé en ce que les moyens séquenceurs (10) sont agencés pour définir répétitivement chaque segment temporel et sa position aléatoire dans un intervalle de temps.

5. Dispositif selon la revendication 4, **caractérisé en ce que** les durées de l'intervalle de temps sont prédéterminées tandis que les durées des segments temporels sont aléatoires mais inférieures à l'intervalle de temps.

6. Dispositif selon la revendication 5, **caractérisé en ce que** la durée du segment est en moyenne égale à environ la moitié de celle de l'intervalle.

7. Dispositif selon l'une des revendications précédentes, **caractérisé en ce que** le marqueur temporel du signal reçu (e2) est lié à un motif discriminable par corrélation (CODE).

8. Dispositif selon la revendication 7, **caractérisé en ce que** le marqueur temporel du signal à émettre (e1) est lié à un autre motif discriminable par corrélation.

9. Dispositif selon l'une des revendications 7 et 8, **caractérisé en ce que** le circuit de traitement en réception (C1) est agencé pour distinguer sélectivement par corrélation et poursuite le motif lié au marqueur temporel du signal reçu (e2) et le motif lié au marqueur temporel d'un second signal à recevoir (r1).

10. Dispositif selon la revendication 9 prise en combinaison avec la revendication 8, **caractérisé en ce que** le second signal à recevoir (r1) correspond au signal émis (e1) par le dispositif et renvoyé par la source dudit signal reçu (e2), ce qui permet d'obtenir sensiblement l'écart temporel entre les deux marqueurs temporels, en compensant les décalages temporels instantanés de propagation.

11. Dispositif selon l'une des revendications 7 à 10, **caractérisé en ce que** le marqueur temporel de chaque signal est lié en fréquence et en phase à la porteuse (Fp) de ce signal, et **en ce que** le circuit de traitement en réception (300) comporte une poursuite de motif par corrélation (351,352, 355) et une poursuite de phase sur la porteuse (354,356) avec une analyse spectrale préalable (353).

12. Dispositif selon l'une des revendications précédentes, **caractérisé en ce qu'**il est également agencé pour retourner ledit signal reçu (e1).

13. Dispositif selon la revendication 12, **caractérisé en ce que** le motif du signal retourné (r1) est sensiblement identique au motif dudit signal reçu (e1).

14. Dispositif selon la revendication 13, **caractérisé en ce que** le générateur de signaux (G2) est apte à coopérer avec le circuit de traitement en réception (C2) pour générer un signal à retourner (r1), équivalent au signal reçu (e1).

15. Dispositif selon la revendication 14, **caractérisé en ce que** les marqueurs temporels du signal retourné (r1) et du signal à émettre (e2) sont liés à des motifs distincts, discriminables par corrélation.

16. Dispositif selon l'une des revendications 7 à 15, **caractérisé en ce que** la porteuse de chaque signal généré (e1,e2) est modulée selon une forme d'impulsion choisie, dont la répétition est définie en fonction d'un motif discriminable par corrélation, associé à ce signal.

17. Dispositif selon la revendication 16, **caractérisé en**

**ce que** la porteuse (Fp) est modulée selon une forme d'impulsion sensiblement gaussienne.

18. Dispositif selon l'une des revendications 16 et 17, **caractérisé en ce que** les impulsions sont sensiblement de même durée choisie (Timp) et de positions temporelles respectives sensiblement aléatoires.

19. Dispositif selon la revendication 18, **caractérisé en ce que** les positions temporelles de deux impulsions successives sont séparées d'une durée inférieure à une valeur seuil, et **en ce qu'**elles sont, en moyenne, séparées d'une durée sensiblement équivalente à la moitié de cette valeur seuil.

20. Dispositif selon l'une des revendications précédentes, **caractérisé en ce que** ladite fréquence porteuse (Fp) est comprise dans la bande des Giga-Hertz.

**Claims**

1. Apparatus for exchanging radio signals provided with time markers, comprising radio transmit/receive means (A), to which are coupled on the one hand a generator (G1) of a signal to be transmitted (e), comprising a carrier and a repetitive time marker, and on the other hand a reception processing circuit (C1), capable of working on a signal received, likewise comprising a carrier and a repetitive time marker, **characterized in that** the radio transmit/receive means are arranged to work substantially on the same carrier frequency when transmitting and when receiving, and **in that** the apparatus comprises sequencer means (10) able to define separate time segments of substantially random successive positions, and to cooperate with the transmit/receive means (SW,A) to authorize transmission only during these time segments, while reception is authorized only outside the segments, thereby making it possible to utilize the time markers without any effect of recurrent masking of reception by transmission.

2. Apparatus according to Claim 1, **characterized in that** the time segments have a random rate, centred around a mean rate.

3. Apparatus according to one of Claims 1 and 2, **characterized in that** the sequencer means (50,51,52) are able to define time segments, for transmission and reception, of substantially equivalent respective average durations.

4. Apparatus according to one of Claims 1 to 3, **characterized in that** the sequencer means (10) are arranged to repetitively define each time segment and its random position in a time interval.

5. Apparatus according to Claim 4, **characterized in that** the durations of the time interval are predetermined while the durations of the time segments are random but less than the time interval.

6. Apparatus according to Claim 5, **characterized in that** the duration of the segment is on average equal to approximately half that of the interval.

7. Apparatus according to one of the preceding claims, **characterized in that** the time marker of the signal received (e2) is linked to a pattern which can be discriminated by correlation (CODE).

8. Apparatus according to Claim 7, **characterized in that** the time marker of the signal to be transmitted (e1) is linked to another pattern which can be discriminated by correlation.

9. Apparatus according to one of Claims 7 and 8, **characterized in that** the reception processing circuit (C1) is arranged to selectively distinguish by correlation and tracking the pattern linked to the time marker of the signal received (e2) and the pattern linked to the time marker of a second signal to be received (r1) .

10. Apparatus according to Claim 9 taken in combination with Claim 8, **characterized in that** the second signal to be received (r1) corresponds to the signal transmitted (e1) by the apparatus and returned by the source of the said signal received (e2), thereby making it possible to obtain substantially the time gap between the two time markers, compensating for the instantaneous propagation time shifts.

11. Apparatus according to one of Claims 7 to 10, **characterized in that** the time marker of each signal is linked in frequency and in phase to the carrier (Fp) of this signal, and **in that** the reception processing circuit (300) has a pattern tracking by correlation (351,352,355) and a phase tracking on the carrier (354,356) with a prior spectral analysis (353).

12. Apparatus according to one of the preceding claims, **characterized in that** it is also arranged to return the said signal received (e1).

13. Apparatus according to Claim 12, **characterized in that** the pattern of the returned signal (r1) is substantially identical to the pattern of the said signal received (e1).

14. Apparatus according to Claim 13, **characterized in that** the signal generator (G2) is able to cooperate with the reception processing circuit (C2) so as to generate a signal to be returned (r1), equivalent to the signal received (e1).

15. Apparatus according to Claim 14, **characterized in that** the time markers of the returned signal (r1) and of the signal to be transmitted (e2) are linked to distinct patterns, which can be discriminated by correlation.

16. Apparatus according to one of Claims 7 to 15, **characterized in that** the carrier of each signal generated (el,e2) is modulated according to a chosen pulse shape, whose repetition is defined as a function of a pattern associated with this signal and which can be discriminated by correlation.

17. Apparatus according to Claim 16, **characterized in that** the carrier (Fp) is modulated according to a substantially Gaussian pulse shape.

18. Apparatus according to one of Claims 16 and 17, **characterized in that** the pulses are substantially of the same chosen duration (Timp) and of substantially random respective temporal positions.

19. Apparatus according to Claim 18, **characterized in that** the temporal positions of two successive pulses are separated by a duration less than a threshold value, and **in that** they are, on average, separated by a duration substantially equivalent to half this threshold value.

20. Apparatus according to one of the preceding claims, **characterized in that** the said carrier frequency (Fp) is within the gigahertz band.

**Patentansprüche**

1. Vorrichtung für den Austausch von mit Zeitmarkierern versehenen Funksignalen, die Funk-Sende-/Empfangsmittel (A) aufweist, mit der einerseits ein Generator (G1) eines zu sendenden Signals (e), das eine Trägerfrequenz und einen repetitiven Zeitmarkierer aufweist, und andererseits eine empfangsseitige Verarbeitungsschaltung (C1) gekoppelt sind, die ein empfangenes Signal verarbeiten kann, das ebenfalls eine Trägerfrequenz und einen repetitiven Zeitmarkierer aufweist,
**dadurch gekennzeichnet, dass** die Funk-Sende-/Empfangsmittel ausgelegt sind, um im Wesentlichen auf der gleichen Trägerfrequenz im Sende- und Empfangsbetrieb zu arbeiten, und dass die Vorrichtung Ablaufsteuerungsmittel (10) aufweist, die in der Lage sind, getrennte Zeitabschnitte von aufeinanderfolgenden, im Wesentlichen zufälligen Positionen zu definieren und mit den Sende-/Empfangsmitteln (SW, A) zusammenzuarbeiten, um das Senden nur während dieser Zeitabschnitte zu erlauben, während der Empfang nur außerhalb der Abschnitte erlaubt ist, was es ermöglicht, die Zeitmarkierer ohne wiederholte Verdeckungswirkung des Empfangs durch das Senden auszuwerten.

2. Vorrichtung nach Anspruch 1, **dadurch gekennzeichnet, dass** die Zeitabschnitte einen Zufallstakt aufweisen, der um einen mittleren Takt zentriert ist.

3. Vorrichtung nach einem der Ansprüche 1 und 2, **dadurch gekennzeichnet, dass** die Ablaufsteuerungsmittel (50, 51, 52) in der Lage sind, Zeitabschnitte für das Senden und den Empfang von im Wesentlichen gleichwertigen mittleren Dauern zu definieren.

4. Vorrichtung nach einem der Ansprüche 1 bis 3, **dadurch gekennzeichnet, dass** die Ablaufsteuerungsmittel (10) ausgelegt sind, um wiederholt jeden Zeitabschnitt und seine zufällige Position in einem Zeitintervall zu definieren.

5. Vorrichtung nach Anspruch 4, **dadurch gekennzeichnet, dass** die Dauern des Zeitintervalls vorbestimmt sind, während die Dauern der Zeitabschnitte zufällig, aber kürzer als das Zeitintervall sind.

6. Vorrichtung nach Anspruch 5, **dadurch gekennzeichnet, dass** die Dauer des Abschnitts im Mittel gleich der Hälfte derjenigen des Intervalls ist.

7. Vorrichtung nach einem der vorhergehenden Ansprüche, **dadurch gekennzeichnet, dass** der Zeitmarkierer des empfangenen Signals (e2) mit einem Muster verbunden ist, das durch Korrelation unterschieden werden kann (CODE).

8. Vorrichtung nach Anspruch 7, **dadurch gekennzeichnet, dass** der Zeitmarkierer des zu sendenden Signals (e1) mit einem anderen Muster verbunden ist, das durch Korrelation unterschieden werden kann.

9. Vorrichtung nach einem der Ansprüche 7 und 8, **dadurch gekennzeichnet, dass** die empfangsseitige Verarbeitungsschaltung (C1) ausgelegt ist, um selektiv durch Korrelation und Verfolgung das mit dem Zeitmarkierer des empfangenen Signals (e2) verbundene Muster und das mit dem Zeitmarkierer eines zweiten zu empfangenden Signals (r1) verbundene Muster zu unterscheiden.

10. Vorrichtung nach Anspruch 9 in Kombination mit Anspruch 8, **dadurch gekennzeichnet, dass** das zweite zu empfangende Signal (r1) dem von der Vorrichtung gesendeten und von der Quelle des empfangenen Signals (e2) zurückgeschickten Signal (e1) entspricht, was es ermöglicht, im Wesentlichen den zeitlichen Abstand zwischen den zwei Zeitmarkierern zu erhalten, indem die augenblicklichen Ausbreitungszeitverzögerungen kompensiert werden.

**11.** Vorrichtung nach einem der Ansprüche 7 bis 10, **dadurch gekennzeichnet, dass** der Zeitmarkierer jedes Signals in Frequenz und Phase mit der Trägerfrequenz (Fp) dieses Signals verbunden ist, und dass die empfangsseitige Verarbeitungsschaltung (300) eine Musterverfolgung durch Korrelation (351, 352, 355) und eine Phasenverfolgung auf der Trägerfrequenz (354, 356) mit einer vorhergehenden Spektralanalyse (353) aufweist.

**12.** Vorrichtung nach einem der vorhergehenden Ansprüche, **dadurch gekennzeichnet, dass** sie ebenfalls ausgelegt ist, um das empfangene Signal (e1) zurückzuschicken.

**13.** Vorrichtung nach Anspruch 12, **dadurch gekennzeichnet, dass** das Muster des zurückgeschickten Signals (r1) im Wesentlichen gleich dem Muster des empfangenen Signals (e1) ist.

**14.** Vorrichtung nach Anspruch 13, **dadurch gekennzeichnet, dass** der Signalgenerator (G2) ausgelegt ist, um mit der empfangsseitigen Verarbeitungsschaltung (C2) zusammenzuwirken, um ein zurückzuschickendes Signal (r1) gleich dem empfangenen Signal (e1) zu erzeugen.

**15.** Vorrichtung nach Anspruch 14, **dadurch gekennzeichnet, dass** die Zeitmarkierer des zurückgeschickten Signals (r1) und des zu sendenden Signals (e2) mit unterschiedlichen Mustern verbunden sind, die durch Korrelation unterscheidbar sind.

**16.** Vorrichtung nach einem der Ansprüche 7 bis 15, **dadurch gekennzeichnet, dass** die Trägerfrequenz jedes erzeugten Signals (e1, e2) gemäß einer gewählten Impulsform moduliert wird, deren Wiederholung in Abhängigkeit von einem durch Korrelation unterscheidbaren Muster definiert wird, das diesem Signal zugeordnet ist.

**17.** Vorrichtung nach Anspruch 16, **dadurch gekennzeichnet, dass** die Trägerfrequenz (Fp) gemäß einer im Wesentlichen Gauß'schen Impulsform moduliert wird.

**18.** Vorrichtung nach einem der Ansprüche 16 und 17, **dadurch gekennzeichnet, dass** die Impulse im Wesentlichen die gleiche gewählte Dauer (Timp) und im Wesentlichen zufällige zeitliche Positionen haben.

**19.** Vorrichtung nach Anspruch 18, **dadurch gekennzeichnet, dass** die zeitlichen Positionen von zwei aufeinander folgenden Impulsen durch eine unter einem Schwellwert liegende Dauer getrennt sind, und dass sie im Durchschnitt durch eine Dauer im Wesentlichen gleich der Hälfte dieses Schwellwerts getrennt sind.

**20.** Vorrichtung nach einem der vorhergehenden Ansprüche, **dadurch gekennzeichnet, dass** die Trägerfrequenz (Fp) im Gigahertz-Bereich liegt.

FIG.1

FENETRE TEMPORELLE D'EMISSION

## FIG.2

## FIG.4

FIG.3A

FIG.3B

EP 0 998 064 B1

FIG.5A

EP 0 998 064 B1

FIG.5B

FIG.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

*   FR 2726412 A

**Littérature non-brevet citée dans la description**

*   **R.F.C. VESSOT ; M.W. LEVINE.** Performance Data of Space and Ground Hydrogen Masers and Ionospheric Studies for High-Accuracy Comparisons between Space and Ground Clocks. *Proc. of the 28th Annual Symp. on Freq. Contr., Ft. Monmouth,* 1974, 408-414